# EUROPÄISCHE PATENTSCHRIFT

(11) **EP 1 821 083 B1**
(45) Veröffentlichungstag und Bekanntmachung des Hinweises auf die Patenterteilung: **31.03.2010**
(21) Anmeldenummer: 07002559.8
(22) Anmeldetag: 06.02.2007
(51) Int. Cl.: G01G 13/00

(54) **Dosiervorrichtung zum Dosieren eines Pulvers**
Dosing device for dosing a powder
Dispositif de dosage destiné au dosage d'une poudre

(30) Priorität: 17.02.2006 DE 102006007485
(43) Veröffentlichungstag der Anmeldung: 22.08.2007
(73) Patentinhaber: ATC Establishment, 9491 Ruggell (LI)
(72) Erfinder: Skufca, Peter Maks, Dipl.-Ing., 1230 Domzale (SI)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A1- 0 540 433
- WO-A-2004/042334
- DE-U1- 9 014 491
- US-A- 3 981 417

## Beschreibung

Die Erfindung betrifft eine Dosiervorrichtung zum kontinuierlichen und kontrollierten Dosieren kleiner Mengen eines Pulvers, insbesondere eines pharmazeutischen Wirkstoffs oder eines Sprengstoffs.

Es ist bekannt, dass Pulver aufgrund der zwischen den einzelnen Pulverpartikeln wirkenden Kohäsionskräfte häufig relativ schlechte Fließeigenschaften aufweisen. Bei der Verarbeitung eines Pulvers kann es aufgrund der Kohäsionskräfte daher leicht zu lokalen Konglomerationen innerhalb eines Pulvervolumens kommen mit der Folge, dass die Pulverdichte schwankt. Diese Dichteschwankungen können eine exakte Dosierung insbesondere kleinster Pulvermengen erschweren oder gar verhindern und stellen daher in den Fällen ein Problem dar, in denen es um eine exakte Dosierung kleinster Mengen eines Pulvers geht.

Eine exakte Dosierung ist beispielsweise in der pharmazeutischen Industrie bei der Herstellung von Arzneimitteln oder in der medizintechnischen Industrie bei der Herstellung von mit Beschichtungen aus inerten, pharmazeutisch unbedenklichen Stoffen versehenen medizintechnischen Produkten erforderlich. Bei der Herstellung von Arzneimitteln gilt es exakte Füllmengen einzuhalten. Bei aus verschiedenen Pulver gebildeten Arzneimitteln ist außerdem eine möglichst homogene Mischung erforderlich. Als Beispiele für medizintechnische Produkte seien für Transfusionen verwendete Polymerschläuche angeführt. Um die Freisetzung von im Polymermaterial enthaltenen Weichmachern, Antioxidantien, Katalysatoren etc. zu verhindern, werden derartige Polymerschläuche üblicherweise an der Innenoberfläche mit einem Pulver aus einem reaktionsinerten Material beschichtet. Für den Erhalt einer möglichst vollständigen und gleichmäßigen Beschichtung der Innenoberfläche_ des Polymerschlauchs ist eine kontinuierliche und kontrollierbare Dosierung des Beschichtungspulvers erforderlich.

Ein weiteres Anwendungsgebiet stellt beispielsweise die Herstellung pyrotechnischer Produkte, beispielsweise eines in der DE 195 46 823 C2 oder DE 29 27 174 B beschriebenen Zündschlauchs, dar. Ähnlich zu dem oben beschriebenen Anwendungsbeispiel geht es bei der Herstellung von Zündschläuchen darum, einen pulvrigen Sprengstoff möglichst vollständig und gleichmäßig auf der Innenoberfläche eines Zündschlauchs zu verteilen, um sicherzustellen, dass bei Zündung des Sprengstoffs eine Stoßwelle von dem einen Ende des Zündschlauchs ohne größere Störung zu dem anderen Ende durchläuft und die Brenngeschwindigkeit in engen Grenzen gehalten wird.

Als ein weiteres Anwendungsgebiet sei die Herstellung einer bei gaschromatographischen Trennverfahren eingesetzten analytischen Trennsäule genannt, wo es auf eine möglichst gleichmäßige Packungsdichte der Trennsubstanz ankommt.

Um eine möglichst exakte Dosierung insbesondere kleinster Pulvermengen zu erreichen, wurden verschiedene Systeme, Verfahren und Vorrichtungen entwickelt.

Eine derartige Dosiervorrichtung ist beispielsweise Gegenstand der DE 36 07 187 A1. Vorgeschlagen wird im Besonderen eine Vorrichtung mit einem drehbaren Dosierteller, welcher im Umfangsbereich eine Vielzahl von Vertiefungen aufweist, die mit seitlichen schlitzförmigen Ausnehmungen am Dosierteller und mit einem druckluftbetriebenen Injektor in Verbindung stehen. Aus einem Vorratsbehälter fallen staubförmige Partikel in die Vertiefungen am Dosierteller und werden über den vom Injektor erzeugten Luftstrom aus den Schlitzen in eine am Injektor angeordnete Leitung gesaugt.

In der US 4,949,766, US 2,540,059, US 4,671,430 oder US 6,715,259 B2 sind Dosiervorrichtungen gezeigt und beschrieben, bei denen eine feinpulvrige Substanz aus einem Vorratsbehälter durch Anlegen eines Vakuums in eine Dosierkammer mit einem der gewünschten Dosis entsprechend anpassbaren Kammervolumen eingebracht und anschließlich die in der Dosierkammer aufgenommene Pulverdosis durch Anlegung eines Drucks aus der Dosierkammer in ein Behältnis, z.B. eine Kapsel, abgegeben wird.

Aus der US 5,826,633 ist ein Pulverbefüllungssystem zur Befüllung einer Vielzahl von Behältnissen mit jeweils einer Einheitsdosis eines schlecht fließfähigen, feinpulvrigen Medikaments bekannt. Zum Zweck der Dosierung wird vorgeschlagen, das zu verarbeitende Pulver zunächst mit Hilfe zweier in Förderrichtung hintereinander geschalteter, zyklisch hin und her bewegter Siebe zu fluidisieren, das fluidisierte Pulver dann in eine Vakuumkammer mit einem Volumen entsprechend der gewünschten Dosis einzubringen, ggfs. überschüssiges Pulver abzustreichen und schließlich die in der Vakuumkammer aufgenommene Pulverdosis in ein Behältnis abzugeben.

Als nachteilig wird bei diesen Dosiervorrichtungen angesehen, dass konstruktiv bedingt eine staubfreie Dosierung so gut wie unmöglich ist. Zudem gestatten diese Dosiervorrichtungen nur eine diskontinuierliche Dosierung und Förderung eines Pulvers.

Weitere Dosiervorrichtungen, bei denen die vorstehend erwähnten Nachteile wenigstens zum Teil behoben sind, sind aus der EP 0 862 890 A1, DE 7804264 U oder der DE 195 46 823 C2 bekannt.

Gegenstand der DE 7804264 U ist ein Dosiergerät zum Zudosieren von festen Stoffen in den Vorrats- oder Mischtrichter von Kunststoffverarbeitungsmaschinen, mit einem feststehenden, nach innen trichterförmig nach unten sich verengenden und unten eine Austrittsöffnung aufweisenden Vorratsbehälter, mit einem Zellenrad, welches einerseits zur Austrittsöffnung des Vorratsbehälters und andererseits zur Eintrittsöffnung eines nach unten zum Vorrats- oder Mischtrichter führenden Dosierrohrs offen ist.

Aus der DE 195 46 823 C2 ist eine Dosiervorrichtung bekannt, die im Wesentlichen aus einer in einem Rohr aufgenommenen, mit definierter Drehzahl angetriebenen Transportschnecke und einer an dem einen Ende der Transportschnecke angeordneten Verteilerscheibe gebildet ist. Das Rohr, in dem die Transportschnecke aufgenommen ist, kommuniziert an seinem der Verteilerscheibe an der Transportschnecke abgewandten Ende mit einem Vorratsbehälter, in dem eine feinpulvrige Substanz aufgenommen ist und mittels einer Mischvorrichtung durchgemischt wird. Die Verteilerscheibe ist außerhalb des, aber dicht hinter dem anderen Ende des Rohrs angeordnet. Die Transportschnecke fördert die aus dem Vorratsbehälter in das Rohr gespeiste, feinpulvrige Substanz in Richtung der mit der Transportschnecke drehenden Verteilerscheibe, die die feinpulvrige Substanz anschließend auf die Innenwand eines Schlauchs verteilt.

Die DE 28 03 166 lehrt ein Silo mit trichterförmig ausgebildetem Bodenbereich und Rührorganen, die eine schneckenartig gewundene Schiene im Silo so drehen, dass das Schüttgut im Bodenbereich des Silos aufwärts bewegt wird.

Weitere Dosiervorrichtungen sind aus der US 3 981 417 A, DE 90 14 491 U1, EP 0 540 433 A1 oder der WO 2004/042334 A bekannt.

Schließlich wird in der EP 0 862 890 A1 eine Pulverdosiervorrichtung zum Eindosieren eines Pulvers in ein Lösungsmittel gezeigt und beschrieben mit einem Sieb, das von der dem Pulvervorrat abgewandten Seite her mit Lösungsmittel beaufschlagt wird, wodurch ein Verstopfen der Sieböffnungen verhindert wird.

Hiervon ausgehend liegt der Erfindung die Aufgabe zugrunde, eine Dosiervorrichtung zu entwickeln, die trotz eines einfachen Aufbaus eine staubfreie, kontinuierliche und präzise kontrollierbare Dosierung kleinster Mengen eines Pulvers ermöglicht.

Gelöst wird diese Aufgabe durch eine Dosiervorrichtung mit den Merkmalen des Anspruchs 1.

Die Kombination einer drehantreibbaren Verteilvorrichtung, z.B. einer Dosierschnecke oder eines oder mehrerer Arme, Flügel etc., mit einem nachgeschalteten, d.h. stromabwärts angeordneten, Dosiersieb, z.B. Lochblech, Drahtgewebe, Metallgitter, etc., gestattet in einfacher Weise eine exakte und kontinuierliche Dosierung eines Pulvers in einer gewünschten Dosiermenge, ohne dass die Anlegung eines Vakuums bzw. Überdrucks erforderlich wäre. Bei einem Antrieb der Verteilvorrichtung wird das dem Dosierrohr beispielsweise aus einem stromaufwärts vorgesehenen Vorratsbehälters zugeführte Pulver über der Dosiersieboberfläche verteilt und schließlich durch das Dosiersieb hindurch ausgetragen. Die Dosiermenge richtet sich im Wesentlichen nach der Drehzahl und der Ausgestaltung der Verteilvorrichtung, z.B. dem Steigungswinkel, dem Innen- und Außendurchmesser einer Dosierschnecke, sowie der Reibung des Pulvers an der Verteilvorrichtung. Über eine geeignete Steuerung/Regelung der Drehzahl der Verteilvorrichtung wird - eine kontinuierliche und kontrollierbare gleichmäßige Förderung des dem Dosierrohr zugeführten Pulvers in einer bestimmten Dosis pro vorgegebener Zeiteinheit ermöglicht. So wird beispielsweise eine über eine bestimmte Länge hinweg gleichmäßige Befüllung eines Zündschlauchs mit einem pulverförmigen Sprengstoff ermöglicht. Durch einen diskontinuierlichen Betrieb der Dosierschnecke ließe sich das Pulver grundsätzlich aber auch diskontinuierlich aus dem Dosierrohr austragen.

Das Dosierrohr kann kreiszylinderisch oder sich kegelförmig verjüngend ausgeführt sein. Die Außenkontur der im Dosierrohr angeordneten Verteilvorrichtung, z.B. der Dosierschnecke, ist vorzugsweise der Innenkontur des Dosierrohrs angepasst. Hierdurch wird der konstruktionsbedingte Spalt zwischen der Verteilvorrichtung und der Innenumfangswandung des Dosierrohrs gering gehalten.

Bei der erfindungsgemäßen Dosiervorrichtung handelt es sich im Besonderen um eine Dosiervorrichtung, bei der das aus einem Vorratsbehälter zugeführte Pulver unter dem Einfluss der Schwerkraft, d.h. gravitationsunterstützt, in Richtung Dosiersieb "fließt".

Bei dem zu dosierenden Pulver kann es sich um ein homogenes Pulver aus gleich oder verschieden großen Partikeln ein und derselben Substanz oder um ein heterogenes Pulvergemisch aus gleich oder verschieden großen Partikeln mehrerer verschiedener Substanzen handeln. Beispiele für die zu dosierenden Substanzen sind hochreaktive Gemische mit Metallpulvern wie Al, Fe, Al/Mg usw., Metalloxiden wie Al₂O₃, ZnO, TiO₂, ZrO₂, und/oder Nichtmetallen wie S, C, etc.. Weitere Beispiele sind inerte Substanzen oder Substanzgemische, absorbierende Substanzen oder Substanzgemische mit oder ohne reaktive Gruppen, oder kolloide Metallpulver mit Pt oder Pd.

Durch die gleichmäßige Verteilung des Pulvers über der Dosiersieboberfläche wird eine Homogenisierung des ausgetragenen Pulvers erreicht, wodurch eine gleichmäßige Dichte erhalten wird. Außerdem wird das Pulver in der Weise fluidisiert, dass die anschließende Weiterförderung oder Verarbeitung, beispielsweise Befüllung eines Schlauchs, einer Kapsel, etc., erheblich vereinfacht wird.

Bevorzugte Weiterentwicklungen der Dosiervorrichtung mit den Merkmalen des Anspruchs 1 sind Gegenstand abhängiger Ansprüche.

Die Verteilvorrichtung weist vorzugsweise eine Dosierschnecke mit einer dem Dosiersieb zugewandten Stirnkante auf, die eine ebene oder gewölbte Fläche überstreicht, die bei einer Drehung der Dosierschnecke über im Wesentlichen die gesamte Länge der Stirnkante hinweg einen konstanten Abstand zur Dosiersieboberfläche einhält. Ist die Dosiersieboberfläche beispielsweise eine ebene Fläche, so liegt die Stirnkante in dieser Weiterentwicklung in einem definierten Abstand in einer zur Dosiersieboberfläche parallelen Ebene. Hiervon abweichend können die Dosiersieboberfläche und die von der Stirnkante überstrichene Fläche aber auch beliebige andere rotationssymmetrische Flächen, z.B. Kegelflächen oder Kugeloberflächen, sein. In jedem Fall wird durch diese Ausführungsform erreicht, dass die der Dosiersieboberfläche gegenüberliegende Stirnkante der Dosierschnecke stets als eine Art Abstreifkante wirkt, die das zu dosierende Pulver gleichmäßig über der Dosiersieboberfläche verteilt. Das Merkmal der Stirnkante, die eine Fläche überstreicht, die über die Länge der Stirnkante hinweg einen konstanten Abstand zur Dosiersieboberfläche einhält, ist jedoch nicht auf die Dosierschnecke beschränkt, sondern lässt sich grundsätzlich auf andere Ausführungen der Verteilvorrichtungen übertragen.

Die Dosiersieböffnungen weisen vorzugsweise eine auf die Korngröße des zu dosierenden Pulvers abgestimmte Größe auf. Um eine Verstopfung des Dosiersiebs zu verhindern, weist das Dosiersieb eine (Maschenweite, Porengröße bzw.) Dosiersieböffnungsweite auf, die größer ist als die mittlere Korngröße des dem Dosierrohr zugeführten Pulvers. Es hat sich gezeigt, dass eine Dosiersieböffnungsweite im Bereich von 10 nm bis 1000 µm für die einleitend beschriebenen, bevorzugten Anwendungsgebiete der Erfindung ausreicht.

Zur Erleichterung der Förderung des feinpulvrigen Stoffs durch das Dosiersieb hindurch kann die Dosiervorrichtung einen das Dosiersieb in translatorische und/oder rotatorische Schwingungen versetzenden Schwingungserzeuger aufweisen.

In einer vorteilhaften Ausführungsform weist das Dosierrohr einen Dosierkanal auf, der über eine Stufe in einen ersten Dosierkanalabschnitt mit kleinem Durchmesser und einen zweiten Dosierkanalabschnitt mit großem Durchmesser unterteilt ist. Während die Verteilvorrichtung in dem ersten Dosierkanalabschnitt angeordnet ist, sitzt das Dosiersieb so in dem zweiten Dosierkanalabschnitt, dass es an der Stufe anliegt. Diese Ausführungsform gestattet eine einfache Montage/Demontage der Verteilvorrichtung bzw. des Dosiersiebs aus dem Dosierrohr. Im Besonderen kann das Dosiersieb unabhängig von der Dosierschnecke aus dem Dosierrohr herausgenommen werden.

Die Dosiervorrichtung umfasst vorzugsweise einen stromaufwärts des Dosierrohrs angeordneten, sich trichterförmig verjüngenden, rotationssymmetrischen Vorratsbehälter. Der Vorratsbehälter und das Dosierrohr sind einstückig oder lösbar, z.B. über eine Verschraubung, miteinander verbunden.

Darüber hinaus sind das Dosierrohr und der Vorratsbehälter vorzugsweise entlang einer gemeinsamen Längsachse angeordnet, wodurch die Konstruktion der erfindungsgemäßen Dosiervorrichtung vereinfacht wird und der Pulvervorrat möglichst geradlinig entlang der gemeinsamen Längsachse in Richtung Dosiersieb fließen kann.

Zum Erhalt eines möglichst hohen Grads an Homogenisierung und zur Fluidisierung des Pulvervorrats im Vorratsbehälters, insbesondere bei hohen Kohäsionskräften zwischen den Pulverpartikeln, weist die Dosiervorrichtung vorzugsweise eine im Vorratsbehälter angeordnete drehantreibbare Mischvorrichtung auf. Diese kann eine oder mehrere Mischspiralen, Mischflügel, Mischbesen, Mischschnecken oder ähnliche Mischelemente aufweisen. Die Mischvorrichtung und die Verteilvorrichtung weisen vorteilhafterweise eine gemeinsame, mit der Längsachse des Dosierrohrs und des Vorratsbehälters fluchtende Drehachse und einen gemeinsamen Drehantrieb auf. In einer besonders einfachen Ausgestaltung sind die Mischvorrichtung und die Verteilvorrichtung, z.B. Dosierschnecke, drehfest auf einer gemeinsamen Welle angeordnet. Hiervon abweichend können die Verteilvorrichtung und die Mischvorrichtung aber auch über separate, koaxial angeordnete Wellen angetrieben werden.

Soll der über das Dosiersieb ausgetragene feinpulvrige Stoff nicht unmittelbar verarbeitet, beispielsweise in einen Schlauch oder ein anderes Behältnis gefüllt werden, kann die Dosiervorrichtung eine der Dosierschnecke nachgeschaltete Förderanlage mit einer auf die gewünschte Dosiermenge abgestimmten Förderkapazität aufweisen. Die Förderanlage weist in diesem Fall vorzugsweise eine Förderschnecke auf, deren Drehachse mit der Längsachse der Dosiervorrichtung einen Winkel größer/gleich 90° einschließt.

Zur Reibungsminderung und Verhinderung unerwünschter chemischer Reaktionen wie Korrosion können diejenigen Oberflächen der Dosiervorrichtung, d.h. des Vorratsbehälters, der Dosierschnecke, der Mischvorrichtung, des Dosiersiebs und/oder des Dosierrohrs, die mit dem zu dosierenden Stoff in Berührung kommen, vorzugsweise zumindest teilweise aus Beryllium-Bronze, Aluminium, Bronze, Plastik, Teflon, Keramik und/oder VA-Stahl hergestellt sein oder eine Beschichtung aus einem derartigen Material aufweisen.

Die Dosiervorrichtung kann des Weiteren eine elektronische Steuereinheit zum Steuern/Regeln der Drehzahl der Dosierschnecke in Abhängigkeit von der gewünschten Dosiermenge umfassen. Die vorgenannten wesentlichen Komponenten der Dosiervorrichtung, nämlich die Verteilvorrichtung, z.B. Dosierschnecke, und das Dosiersieb, und die optionalen Komponenten der Dosiervorrichtung, wie die Mischvorrichtung und die Förderschnecke, können mechanisch, hydraulisch oder elektronisch angetrieben werden. Insbesondere bei einem elektronischen Antrieb dieser Komponenten der Dosiervorrichtung lässt sich die Drehzahl der Dosierschnecke und ggf. der Mischvorrichtung problemlos überwachen und kontrollieren.

Die erfindungsgemäße Dosiervorrichtung wird im Folgenden anhand der Zeichung erläutert, die einen schematisierten Vertikalschnitt durch eine erfindungsgemäße Dosiervorrichtung zeigt.

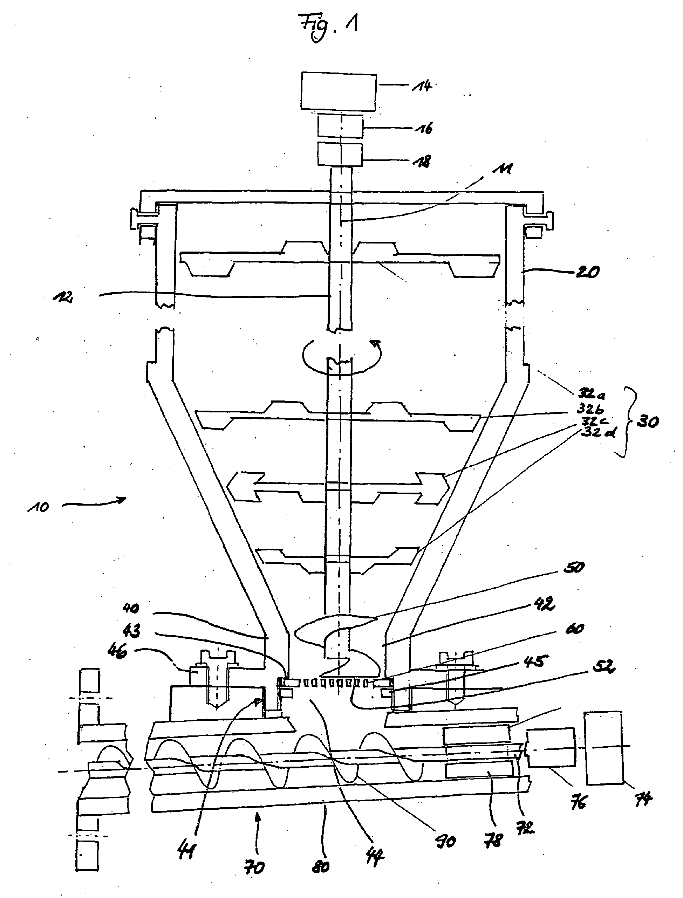

Die in der Figur gezeigte entlang einer vertikalen Längsachse 11 angeordnete Dosiervorrichtung 10 weist einen sich trichterartig verjüngenden, rotationssymmetrischen Vorratsbehälter 20 auf, dessen Ausgang 22 in ein zylindrisches Dosierrohr 40 mündet. Das Dosierrohr 40 ist an seinem dem Vorratsbehälter 20 abgewandten Ende 41 über einen Ringflansch 46 mit einer Förderanlage 70 verbunden.

In dem mit dem Dosierrohr 40 einstückig verbundenen Vorratsbehälter 20 ist eine Mischvorrichtung 30 angeordnet. Die Mischvorrichtung 30 umfasst eine Vielzahl von axial nacheinander an einer Drehwelle 12 drehfest angeordneten Mischflügeln 32a, 32b, 32c, 32d. Eine Drehung der Mischflügel 32a, 32b, 32c, 32d um die durch die Drehwelle 12 definierte Drehachse 11 resultiert in einer Durchmischung eines im Vorratsbehälters 20 vorhandenen Pulvervorrats, wodurch einerseits eine Homogenisierung des Pulvers und andererseits eine Fluidisierung des Pulvers erreicht wird.

Die über eine Lagerung 18 gelagerte Drehwelle 12, deren Drehachse mit der Längsachse 10 fluchtet, ist über eine Kupplung 16 direkt oder indirekt, z.B. über ein Getriebe, an einen steuer-/regelbaren Drehantrieb 14, z.B. Elektromotor, Hyraulikmotor, etc., angeflanscht.

Im Dosierrohr 40, das in der gezeigten Ausführungsform einstückig mit dem Vorratsbehälter 20 verbunden ist, sind axial nacheinander eine Dosierschnecke 50 und ein Dosiersieb 60 angeordnet. Die Dosierschnecke 50 ist ebenso wie die Mischflügel 32a, 32b, 32c, 32d drehfest an der Drehwelle 12 angeordnet, so dass die Dosierschnecke 50 gemeinsam mit den Mischflügeln 32a, 32b, 32c, 32d der Mischvorrichtung 30, d.h. mit derselben Drehzahl, um die Drehachse 12 in Drehung versetzt werden kann. Die Drehrichtung ist in der Figur durch einen Pfeil angegeben.

Der durch das Dosierrohr 40 definierte Dosierkanal ist in der Figur von oben nach unten durch eine Stufe 43 in einen ersten Dosierkanalabschnitt 42 und einen zweiten Dosierkanalabschnitt 44 unterteilt. Während die Dosierschnecke 50 im ersten Dosierkanalabschnitt 42 angeordnet ist, ist das Dosiersieb 60 in Anlage an der Stufe 43 im zweiten Dosierkanalabschnitt 44. Das Dosiersieb 60 wird mittels eines nicht näher spezifierten Haltemittels 45 in der in der Figur gezeigten Position festgehalten. Wie aus der Figur zu erkennen ist, weist der zweite Dosierkanalabschnitt 44 einen dem Außendurchmesser des Dosiersiebs 60 angepassten Innendurchmesser auf, der größer ist als der Innendurchmesser des ersten Dosierkanalabschnitts 42, wodurch die Stufe 43 eine von der Dosierschnecke 50 abgewandte Anlage- oder Stützfläche für das Dosiersieb 60 bildet. Diese Ausgestaltung gewährleistet zum Einen, dass das Dosiersieb 60 und die Dosierschnecke 50 von verschiedenen Seiten her in das Dosierrohr 40 eingesetzt und damit voneinander unabhängig ein-/ausgebaut werden können. Zum Anderen verhindert die in der Figur gezeigte Anordnung einen Ringspalt zwischen dem Dosiersieb 60 und der Innenumfangswandung des Dosierrohrs 40 stromaufwärts des Dosiersiebs 60, wodurch im Betrieb der Dosiervorrichtung 10 Pulververklumpungen verhindert werden, die sich in dem Fall ergeben könnten, in dem die Stufe dem Vorratsbehälter 20 zugewandt ist.

Das Dosiersieb 60 weist in der bevorzugten Ausführungsform eine ebene Dosiersieboberfläche mit einer Vielzahl von gleichmäßig verteilten Dosiersieböffnungen auf. Die Dosiersieböffnungen weisen eine auf die Größe der zu dosierenden Substanzpartikel abgestimmte Weite (Durchmesser, Länge, Breite, etc.) auf. Um eine Verstopfung des Dosiersiebs zu verhindern, weist das Dosiersieb eine (Maschenweite, Porengröße bzw.) Dosiersieböffnungsweite auf, die größer ist als die mittlere Korngröße des dem Dosierrohr zugeführten Pulvers. Das Dosiersieb hat bei der erfindungsgemäßen Dosiervorrichtung nicht die für ein Sieb übliche Funktion der Trennung verschieden großer Pulverpartikeln. Vielmehr kommt es darauf an, dass sämtliche Pulverpartikel das Dosiersieb passieren können. Andernfalls könnte das Dosiersieb verstopfen mit der Folge, dass eine weitere Dosierung verhindert oder wenigstens erschwert wird. Es hat sich jedoch gezeigt, dass eine Dosiersieböffnungsweite im Bereich von 10 nm bis 1000 µm für die meisten Anwendungsgebiete der erfindungsgemäßen Dosiervorrichtung ausreicht.

Die dem Dosiersieb 60 gegenüberliegende Stirnkante der Dosierschnecke 52 ist vorzugsweise so ausgestaltet, dass sie bei einer Drehung der Dosierschnecke eine zur Dosiersieboberfläche parallele ebene Fläche überstreicht, die über die Länge der Stirnkante hinweg einen definierten, gleichbleibenden Abstand zur Dosiersieboberfläche einhält. Hierdurch wird erreicht, dass die der Dosiersieboberfläche gegenüberliegende Stirnkante der Dosierschnecke 52 als eine Art Abstreifkante wirkt, die das zu dosierende Pulver gleichmäßig über der Dosiersieboberfläche verteilt.

In der in der Figur gezeigten Ausführungsform wird die über das Dosiersieb pro vorgegebener Zeiteinheit ausgetragene Pulverdosis nicht unmittelbar verarbeitet, beispielsweise in einen Schlauch oder ein anderes Behältnis gefüllt, sondern über eine stromabwärts des Dosierrohrs 40 angeordnete Förderanlage 70 weitertransportiert. Die Förderanlage 70 weist eine auf die ausgetragene Pulverdosis abgestimmte Förderkapazität auf. Die Förderanlage 70 weist eine in einem zylindrischen Förderrohr 80 drehantreibbare Förderschnecke 90 auf, deren Drehachse 92 mit der Längsachse 11 der Dosiervorrichtung 10 einen Winkel größer/gleich 90° einschließt. Das Dosierrohr 40 ist, wie es in der Figur gezeigt ist, über eine Verschraubung an das Förderrohr 80 angeflanscht.

In der Figur nicht gezeigt ist eine eine elektronische Steuereinheit zum Steuern/Regeln der Drehzahl der Mischvorrichtung 30, der Dosierschnecke 50 und der Förderschnecke 90 in Abhängigkeit von der gewünschten Pulverdosis pro vorgegebener Zeiteinheit.

Die über eine Lagerung 78 im Förderrohr 80 drehbar gelagerte Drehwelle 72 ist über eine Kupplung 76 direkt oder indirekt an einen steuer-/regelbaren Drehantrieb 74 z.B. Elektromotor, Hydraulikmotor, etc., angeflanscht.

Die erfindungsgemäße Dosiervorrichtung ist nicht auf die Merkmale und Details der vorstehend dargestellten bevorzugten Ausführungsform beschränkt, sondern kann verschiedenartig abgewandelt werden.

In der bevorzugten Ausführungsform ist das Dosierrohr 40 ein zylindrisches Rohr. Hiervon abweichend kann das Dosierrohr aber als ein sich in Förder- oder Dosierrichtung verjüngendes, z.B. konisches, Rohr ausgeführt sein. In jedem Fall ist die Außenkontur der Dosierschnecke 50 der Innenkontur des Dosierrohrs 40 angepasst.

Des Weiteren sind in der bevorzugten Ausführungsform das Dosierrohr 40 und der Vorratsbehälter 20 einstückig miteinander verbunden. Hiervon abweichend können das Dosierrohr 40 und der Vorratsbehälter 20 grundsätzlich aber auch separat ausgebildet und in geeigneter Weise, z.B. durch eine Verschraubung eines Flanschabschnitts auf Seiten des Vorratsbehälters 20 und eines Flanschabschnitts auf Seiten des Dosierrohrs 40, lösbar aneinandergefügt sein. Während die bevorzugte Ausführungsform die Konstruktion insgesamt vereinfacht, gestattet die alternative Ausführungsform eine einfache Montage bzw. die Auswechselbarkeit der einzelnen Komponenten der Dosiervorrichtung.

Als eine weitere Alternative zu der vorstehend dargestellten bevorzugten Ausführungsform kann die Drehwelle 12 zwischen der Mischvorrichtung 30 und der Dosierschnecke 50 durch eine Kupplung getrennt sein.

Abweichend von der bevorzugten Ausführungsform können darüber hinaus die Dosiersieboberfläche des Dosiersiebs 60 und dementsprechend die von der Stirnkante der Dosierschnecke 50 überstrichene Fläche aber auch beliebige andere rotationssymmetrische Flächen, z.B. Kegelflächen oder Kugeloberflächen, sein. In jedem Fall wird durch den gleichbleibenden Abstand zwischen dem Dosiersieb 60 und der Dosierschnecke 50 über die Länge der Stirnkante hinweg gewährleistet, dass die der Dosiersieboberfläche gegenüberliegende Stirnkante stets als eine Art Abstreifkante wirkt, die die zu dosierende feinpulvrigen Substanz gleichmäßig auf der Dosiersieboberfläche verteilt.

Des Weiteren können die Dosierschnecke 50 und die Mischvorrichtung 30 abweichend von der bevorzugten Ausführungsform über separate Drehwellen angetrieben werden. In diesem Fall ist eine der Drehwellen eine Hohlwelle, die koaxial zur anderen Drehwelle um diese herum angeordnet ist. Die koaxial angeordneten Drehwellen können voneinander unabhängig angetrieben werden oder über ein Getriebe gekoppelt sein. In letzterem Fall ist der Antrieb nur einer Drehwelle erforderlich.

## Patentansprüche

1. Dosiervorrichtung mit einem Dosierrohr (40) und einem im Dosierrohr (40) angeordneten Dosiersieb (60), **das eine Vielzahl von über eine Dosiersieboberfläche gleichmäßig verteilten Dosiersieböffnungen mit einer Öffnungsweite größer als die mittlere Korngröße eines dem Dosierrohr (40) zugeführten Pulvers aufweist, dadurch gekennzeichnet, dass**
das Dosierrohr (40) einen über eine Stufe (43) in einen ersten Dosierkanalabschnitt (42) mit kleinem Durchmesser und einen zweiten Dosierkanalabschnitt (44) mit großem Durchmesser unterteilt ist,
das Dosiersieb (60) in dem zweiten Dosierkanalabschnitt (44) angeordnet ist und an der Stufe (43) anliegt, und
stromaufwärts des Dosiersiebs (60) **in dem ersten Dosierkanalabschnitt (42) eine** drehantreibbare Verteilvorrichtung (50) zum großflächigen Verteilen **des** dem Dosierrohr (40) zugeführten Pulvers über die **Dosiersieboberfläche** des Dosiersiebs (60) **angeordnet ist.**

2. Dosiervorrichtung nach Anspruch 1, **dadurch gekennzeichnet, dass** die Verteilvorrichtung (50) eine Dosierschnecke (52) aufweist.

3. Dosiervorrichtung nach Anspruch 2, **dadurch gekennzeichnet, dass** die dem Dosiersieb (60) zugewandte Stirnkante (53) der Dosierschnecke (52) eine Fläche überstreicht, die entlang der Stirnkante (53) einen konstanten Abstand zur Dosiersieboberfläche (61) einhält.

4. Dosiervorrichtung nach einem der Ansprüche 1 bis 3, **gekennzeichnet durch** einen das Dosiersieb (60) in Schwingungen versetzenden Schwingungserzeuger.

5. Dosiervorrichtung nach einem der Ansprüche 1 bis **4**, **gekennzeichnet durch** einen stromaufwärts des Dosierrohrs (40) und mit diesem verbundenen, sich trichterförmig verjüngenden Vorratsbehälter (20).

6. Dosiervorrichtung nach Anspruch 5, **dadurch gekennzeichnet, dass** das Dosierrohr (40) und der Vorratsbehälter (20) entlang einer gemeinsamen Längsachse angeordnet sind.

7. Dosiervorrichtung nach Anspruch **5** oder **6**, **gekennzeichnet durch** eine im Vorratsbehälter (20) angeordnete drehantreibbare Mischvorrichtung (30).

8. Dosiervorrichtung nach Anspruch **7**, **dadurch gekennzeichnet, dass** die Mischvorrichtung (30) und die Verteilvorrichtung (50) eine gemeinsame, mit der Längsachse des Dosierrohrs (40) und des Vorratsbehälters (20) fluchtende Drehachse aufweisen.

9. Dosiervorrichtung nach Anspruch **8**, **dadurch gekennzeichnet, dass** die Mischvorrichtung (30) und die Verteilvorrichtung (50) einen gemeinsamen Drehantrieb aufweisen.

10. Dosiervorrichtung nach einem der Ansprüche 1 bis **9**, **gekennzeichnet durch** eine stromabwärts des Dosierrohrs (40) angeordnete Förderanlage (70) mit einer auf die Dosiermenge der Dosiervorrichtung abgestimmten Förderkapazität.

11. Dosiervorrichtung nach Anspruch **10**, **dadurch gekennzeichnet, dass** die Förderanlage (70) eine drehantreibbare Förderschnecke (90) aufweist.

12. Dosiervorrichtung nach einem der Ansprüche 1 bis **11**, **dadurch gekennzeichnet, dass** diejenigen Komponenten, die mit dem zu dosierenden Pulver in Berührung kommen, zumindest teilweise aus Beryllium-Bronze, Aluminium, Bronze, Kunststoff, Teflon, Keramik und/oder VA-Stahl hergestellt sind oder eine Oberflächenbeschichtung aus zumindest einem dieser Materialien aufweisen.

13. Dosiervorrichtung nach einem der Ansprüche 1 bis **12**, **gekennzeichnet, durch** eine elektronische Steuereinheit zum Steuern/Regeln der Drehzahl der Verteilvorrichtung (50) in Abhängigkeit von der gewünschten Dosiermenge.

## Claims

1. A metering device having a metering tube (40) and a metering screen (60) arranged in the metering tube (40), which metering screen has a plurality of metering screen openings uniformly distributed over a metering screen surface and having an opening width larger than the mean particle size of a powder fed to the metering tube (40), **characterised in that**
the metering tube (40) is subdivided by way of a step (43) into a first metering channel section (42) of small diameter and a second metering channel section (44) of large diameter,
the metering screen (60) is arranged in the second metering channel section (44) and abuts the step (43), and
upstream of the metering screen (60) in the first metering channel section (42), a rotatably drivable distributing device (50) for large-area distribution of the powder supplied to the metering tube (40) is arranged above the metering screen surface of the metering screen (60).

2. A metering device according to claim 1, **characterised in that** the distributing device (50) comprises a metering screw (52).

3. A metering device according to claim 2, **characterised in that** the end edge (53) of the metering screw (52) facing the metering screen (60) sweeps over a surface that maintains along the end edge (53) a constant distance from the metering screen surface (61).

4. A metering device according to any one of claims 1 to 3, **characterised by** a vibrator causing the metering screen (60) to vibrate.

5. A metering device according to any one of claims 1 to 4, **characterised by** a storage hopper (20) tapering in the manner of a funnel upstream of and joined to the metering tube (40).

6. A metering device according to claim 5, **characterised in that** the metering tube (40) and the storage hopper (20) are arranged along a common longitudinal axis.

7. A metering device according to claim 5 or 6, **characterised by** a rotatably drivable mixing device (30) arranged in the storage hopper (20).

8. A metering device according to claim 7, **characterised in that** the mixing device (30) and the distributing device (50) have a common axis of rotation aligned with the longitudinal axis of the metering tube (40) and of the storage hopper (20).

9. A metering device according to claim 8, **characterised in that** the mixing device (30) and the distributing device (50) have a common rotary drive.

10. A metering device according to any one of claims 1 to 9, **characterised by** a conveyor system (70) that is arranged downstream of the metering tube (40) and has a transport capacity adjusted to the measured quantity of the metering device.

11. A metering device according to claim 10, **characterised in that** the conveyor system (70) comprises a rotatably drivable screw conveyor (90).

12. A metering device according to any one of claims 1 to 11, **characterised in that** those components that come into contact with the powder to be metered are manufactured at least partially from beryllium bronze, aluminium, bronze, plastics material, Teflon, ceramics and/or stainless steel or have a surface coating of at least one of these materials.

13. A metering device according to any one of claims 1 to 12, **characterised by** an electronic control unit for controlling/regulating rotational speed of the distributing device (50) as a function of the desired measured quantity.

## Revendications

1. Dispositif de dosage, comportant un tube de dosage (40) et un tamis de dosage (60), agencé dans le tube de dosage (40) et muni d'une pluralité d'orifices de dosage, répartis uniformément sur la surface du tamis et ayant une largeur d'ouverture supérieure à la grosseur de grains moyenne d'une poudre acheminée vers le tube de dosage (40), **caractérisé en ce que**
le tube de dosage (40) est divisé par l'intermédiaire d'un épaulement (43) en un premier tronçon du conduit de dosage (42) à petit diamètre et en un deuxième tronçon du conduit de dosage (44) à grand diamètre,
le tamis de dosage (60) est agencé dans le deuxième tronçon du conduit de dosage (44) et est en appui sur l'épaulement (43), et
un dispositif de distribution (50), apte à être entraîné en rotation pour distribuer sur une grande surface la poudre acheminée vers le tube de dosage (40), est disposé en amont du tamis de dosage (60), dans le premier tronçon du conduit de dosage (42), au-dessus de la surface de dosage du tamis de dosage (60).

2. Dispositif de dosage selon la revendication 1, **caractérisé en ce que** le dispositif de distribution (50) comporte une vis sans fin (52).

3. Dispositif de dosage selon la revendication 2, **caractérisé en ce que** l'arête frontale (53) de la vis sans fin (52), orientée vers le tamis de dosage (60), passe sur une surface qui conserve le long de l'arête frontale (53) une distance constante par rapport à la surface de dosage (61) du tamis de dosage.

4. Dispositif de dosage selon l'une quelconque des revendications 1 à 3, **caractérisé par** un générateur de vibrations, imprimant des vibrations sur le tamis de dosage (60).

5. Dispositif de dosage selon l'une quelconque des revendications 1 à 4, **caractérisé par** un réservoir de stockage (20) se rétrécissant en forme de trémie, disposé en amont du tube de dosage (40) et relié à ce dernier.

6. Dispositif de dosage selon la revendication 5, **caractérisé en ce que** le tube de dosage (40) et le réservoir de stockage (20) sont disposés le long d'un axe longitudinal commun.

7. Dispositif de dosage selon la revendication 5 ou 6, **caractérisé par** un mélangeur (30), disposé dans le réservoir de stockage (20) et apte à être entraîné en rotation.

8. Dispositif de dosage selon la revendication 7, **caractérisé en ce que** le mélangeur (30) et le dispositif de distribution (50) comportent un axe de rotation commun, aligné avec l'axe longitudinal du tube de dosage (40) et du réservoir de stockage (20).

9. Dispositif de dosage selon la revendication 8, **caractérisé en ce que** le mélangeur (30) et le dispositif de distribution (50) comportent un système d'entraînement en rotation commun.

10. Dispositif de dosage selon l'une quelconque des revendications 1 à 9, **caractérisé par** un dispositif de transport (70), disposé en aval du tube de dosage (40) et ayant une capacité de transport ajustée à la quantité de dosage du dispositif de dosage.

11. Dispositif de dosage selon la revendication 10, **caractérisé en ce que** le dispositif de transport (70) comporte une vis sans fin (90) apte à être entraînée en rotation.

12. Dispositif de dosage selon l'une quelconque des revendications 1 à 11, **caractérisé en ce que** les composants qui entrent en contact avec la poudre à doser sont réalisés au moins en partie en bronze-bérylium, aluminium, bronze, matière plastique, téflon, céramique et/ou acier VA ou comportent un revêtement de surface réalisé dans au moins l'un de ces matériaux.

13. Dispositif de dosage selon l'une quelconque des revendications 1 à 12, **caractérisé par** une unité de commande électronique pour commander et régler la vitesse de rotation du dispositif de distribution (50) en fonction de la quantité de dosage souhaitée.
